# EUROPÄISCHE PATENTSCHRIFT

(11) **EP 3 332 158 B1**
(45) Veröffentlichungstag und Bekanntmachung des Hinweises auf die Patenterteilung: **11.11.2020**
(21) Anmeldenummer: 16722520.0
(22) Anmeldetag: 25.04.2016
(51) Int. Cl.: F16K 3/24

(54) **VERTEILERVENTIL**
DISTRIBUTION VALVE
VANNE DE DISTRIBUTION

(43) Veröffentlichungstag der Anmeldung: 13.06.2018
(73) Patentinhaber: Taconova Group AG, 8050 Zürich (CH)
(72) Erfinder: KALFA, Serdar, 8057 Zürich (CH); DICKENSCHEID, Lothar, 8952 Schlieren (CH)
(74) Vertreter: Münch, Martin Walter
(86) Internationale Anmeldenummer: PCT/CH2016/000071
(87) Internationale Veröffentlichungsnummer: WO 2016/101080

(56) Entgegenhaltungen:
- WO-A1-03/089844
- WO-A1-2008/058320
- DE-A1-102008 010 347
- GB-A- 2 136 538

## Beschreibung

### Technisches Gebiet

Die Erfindung betrifft ein Verteilerventil gemäss Anspruch 1 und eine Verteileranordnung mit solchen Verteilerventilen gemäss Anspruch 19.

### Stand der Technik

Verteilerventile kommen dort zum Einsatz, wo aus einer Hauptleitung eine oder mehrere Nebenleitungen abgezweigt werden sollen. In Kombination mit einem Durchflussmesser werden sie bevorzugterweise dort eingesetzt, wo der Durchfluss eines Mediums durch ein Rohrleitungssystem für einen längeren Zeitraum auf einen bestimmten Wert eingestellt werden soll und dabei permanent und direkt ablesbar sein soll. Insbesondere auf dem Gebiet der Haustechnik finden solche Verteilerventile zunehmend Verwendung zum Einstellen des Durchflusses von Warmwasser durch einzelne Warmwasser-Heizkreisläufe. Dabei werden bevorzugterweise eine Vielzahl von Verteilerventilen für eine entsprechende Anzahl Heizkreisläufe dadurch gebildet, dass ein Verteilerbalken, welcher als gemeinsames Gehäuse und als gemeinsamer Zulauf für die Verteilerventile dient, mit einer entsprechenden Anzahl von Ventileinheiten bestückt wird. Diese bestehen jeweils aus einer Zweigleitung zum Anschluss an den Zulauf des Heizkreislaufs und einer Einstelleinheit zum Einstellen bzw. einer Einstell- und Messeinheit zum Einstellen und Anzeigen des Durchflusses durch die Zweigleitung, welche in sich direkt gegenüber liegende Gewindebohrungen im Verteilerbalken eingeschraubt werden.

Bei solchen Anlagen muss der Abgleich sämtlicher Heizkreisläufe zusammen erfolgen, da diese ein gemeinsames hydraulisches System bilden und sich dadurch gegenseitig beeinflussen. Dies ist ein relativ aufwendiges Unterfangen, welches zudem viel Erfahrung erfordert. Entsprechend wichtig ist es, dass bei einem Eingriff an einem der Heizkreisläufe, welche eine vorübergehende Absperrung des Kreislaufs mittels seines Verteilerventils vom Gesamtsystems erfordert, z.B. um ein wasserführendes Bauteil auszutauschen, anschliessend gezielt wieder die ursprüngliche Durchflussmenge eingestellt werden kann, ohne dass erneute aufwendige Abgleichmessungen notwendig werden.

Von der Firma Strawa Wärmetechnik GmbH in Deutschland ist unter der Bezeichnung "Regolux" ein Verteilerventil mit Durchflussmesser bekannt, bei welchem aussen am Ventilgehäuse eine Anschlaghaube aufgeschraubt ist, welche einen axialen Anschlag zur Festlegung einer maximalen Ventilöffnung bereitstellt und deren Position durch Verdrehen gegenüber dem Gehäuse verändert werden kann. Diese Haube wird mit einem zusätzlichen Sicherungsring in der jeweiligen eingestellten Position arretiert. Diese Lösung weist jedoch den Nachteil auf, dass sie viel Bauraum benötigt. Auch ist dieses Ventil aus relativ vielen Bauteilen aufgebaut, was unerwünscht ist, da diese Ventile einem enormen Preiskampf ausgesetzt sind, weshalb es ein anhaltendes Bedürfnis ist, die Herstellungskosten für solche Ventile zu senken.

Weiterer relevanter Stand der Technik ist durch DE-A-10 2008 010 347, WO-A-2005/111479, WO-A-03/089844 und durch die nachveröffentlichte EP-A-3 203 192 gegeben.

### Darstellung der Erfindung

Es stellt sich daher die Aufgabe, Verteilerventile zur Verfügung zu stellen, welche die zuvor erwähnten Nachteile des Standes der Technik nicht aufweisen oder diese zumindest teilweise vermeiden.

Diese Aufgabe wird durch das Verteilerventil gemäss Anspruch 1 gelöst.

Gemäss diesem betrifft ein erster Aspekt der Erfindung ein Verteilerventil welches sich für die Verwendung im Zulauf oder Rücklauf eines Medium-Kreislaufs zum Heizen oder Kühlen insbesondere im Bereich der Haustechnik eignet.

Das Verteilerventil weist ein die Zu- bzw. Rücklaufleitung bildendes Gehäuse auf, eine vom Gehäuse abgehende Zweigleitung sowie eine separat vom Gehäuse ausgebildete und gegenüberliegend der Zweigleitung am Gehäuse angeordnete und die Gehäusewandung durchdringende Einstelleinheit, zum Einstellen einer Durchflussmenge des Mediums durch die Zweigleitung.

Die Einstelleinheit umfasst weiter eine Einstellspindel, deren axiale Position gegenüber einem bevorzugterweise fest mit dem Gehäuse verbundenen Bauteil der Einstelleinheit durch Verdrehen gegenüber diesem Bauteil verändert werden kann, unter gleichzeitiger Veränderung der Durchflussmenge durch die Zweigleitung derart, dass ein axiales Bewegen der Einstellspindel gegenüber diesem Bauteil in Richtung auf die Zweigleitung zu eine Vergrösserung der Durchflussmenge durch die Zweigleitung bewirkt, und ein axiales Bewegen der Einstellspindel gegenüber diesem Bauteil in Richtung von der Zweigleitung weg eine Verkleinerung der Durchflussmenge durch die Zweigleitung bewirkt.

Des Weiteren umfasst das Verteilerventil einstellbare Anschlagmittel, mit denen durch Anschlagen einer mit der Einstellspindel in Verbindung stehenden ersten Anschlagfläche an einer mit dem Gehäuse in Verbindung stehenden zweiten Anschlagfläche eine axiale Bewegung der Einstellspindel gegenüber dem Bauteil der Einstelleinheit, gegenüber welchem sie wie zuvor dargelegt zur Einstellung der Durchflussmenge durch die Zweigleitung verdreht wird, in Richtung auf die Zweigleitung zu bei einer bestimmten Axialposition begrenzt werden kann, zur Begrenzung der maximal einstellbaren Durchflussmenge durch die Zweigleitung.

Durch die Erfindung wird es möglich, auf kostengünstige Weise sehr kompakte und einfach aufgebaute Verteilerventile zur Verfügung zu stellen, bei denen eine einmal eingestellte Begrenzung der maximalen Durchflussmenge bei einer vorübergehenden Absperrung oder Verringerung der Durchflussmenge erhalten bleibt.

In einer bevorzugten Ausführungsform des Verteilerventils ist die zweite Anschlagfläche von dem mit dem Gehäuse verbundenen Bauteil der Einstelleinheit, gegenüber welchem die Einstellspindel anspruchsgemäss unter Veränderung der Durchflussmenge durch die Zweigleitung verdreht wird, gebildet oder steht mit diesem Bauteil in Verbindung. Hierdurch ergibt sich der Vorteil, dass die Anschlagmittel integral innerhalb der Einstelleinheit realisiert werden können, welche typischerweise als fertig montierte Komponente für gattungsgemässe Verteilerventile gehandelt wird, so dass die Anzahl der zur Bereitstellung der erfindungsgemässen Verteilerventile zu bewirtschaftenden Ventilkomponenten klein gehalten werden kann und Schnittstellenprobleme zwischen separat eingekauften Komponenten von vornherein vermieden werden können.

In einer weiteren bevorzugten Ausführungsform ist das Verteilerventil derartig aufgebaut, dass die erste Anschlagfläche in Richtung der Zweigleitung weist und diese zur Begrenzung der maximal einstellbaren Durchflussmenge durch die Zweigleitung in axialer Richtung bezogen auf die Verdreh- und Verschiebeachse der Einstellspindel an der zweiten Anschlagfläche anschlägt. Diese Bauweise ermöglicht eine einfache und robuste Konstruktion. Dies im Gegensatz zu ebenfalls im Rahmen der Erfindung vorgesehenen Anschlagflächen, welche in Rotationsrichtung der Einstellspindel wirken.

In noch einer weiteren bevorzugten Ausführungsform umfasst das Verteilerventil zusätzlich zur Einstelleinheit zum Einstellen der Durchflussmenge durch die Zweigleitung auch eine Messeinheit zum Messen der eingestellten Durchflussmenge durch die Zweigleitung und zum Anzeigen derselben aussen am Verteilerventil.

Dabei ist es bevorzugt, dass die Einstelleinheit und die Messeinheit gemeinsam als kombinierte Einstell- und Messeinheit ausgebildet sind. Hierdurch ergibt sich der Vorteil, dass eine kompakte Bauweise derartiger Ventile erreicht wird und auch hier die Anzahl der zur Bereitstellung der erfindungsgemässen Verteilerventile zu bewirtschaftenden Ventilkomponenten klein gehalten werden kann.

Die einstellbaren Anschlagmittel können mit Vorteil in der eingestellten Position arretiert werden, damit ein unbeabsichtigtes Verstellen der eingestellten maximalen Durchflussmenge durch die Zweigleitung sicher verhindert wird.

Bei dem erfindungsgemässen Verteilerventil ist die Position der ersten Anschlagfläche der einstellbaren Anschlagmittel, insbesondere deren axiale Position bezüglich der Einstellspindel einstellbar. Hierdurch wird ein besonders einfacher Aufbau möglich, indem ein die axiale Bewegung der Einstellspindel bewirkendes Aussengewinde derselben gleichzeitig dazu verwendet werden kann, ein die erste Anschlagfläche bereitstellendes Bauteil (anspruchsgemässes Anschlagbauteil) zu tragen, beispielsweise eine auf diesem Gewinde angeordnete Anschlagmutter, deren axiale Position bezüglich der Einstellspindel durch Verdrehen auf dem Gewinde eingestellt werden kann.

Hierdurch wird es zudem auch möglich, die zweite Anschlagfläche fest mit dem Gehäuse bzw. mit dem Bauteil der Einstelleinheit, gegenüber welchem die Einstellspindel anspruchsgemäss zur Einstellung der Durchflussmenge durch die Zweigleitung verdreht wird, zu verbinden, z.B. durch einstückige Ausbildung mit denselben, was ebenfalls bevorzugt ist, weil auch hierdurch ein kompakter und einfacher Aufbau mit wenigen Bauteilen begünstigt wird.

Gemäss einer bevorzugten Ausführungsform ist es auch vorgesehen, das Verteilerventil derartig auszugestalten, dass die Position der zweiten Anschlagfläche, insbesondere deren axiale Position, bezüglich des Gehäuses bzw. des Bauteils der Einstelleinheit, gegenüber welchem die Einstellspindel anspruchsgemäss zur Einstellung der Durchflussmenge durch die Zweigleitung verdreht wird, einstellbar ist.

Dabei ist es für den Fall, dass die erste Anschlagfläche von einem Anschlagbauteil gebildet wird, welches auf einem Aussengewinde der Einstellspindel befestigt ist, so dass dessen axiale Position bezüglich der Einstellspindel durch Verdrehen gegenüber der Einstellspindel eingestellt werden kann, und für den Fall, dass dabei die einstellbaren Anschlagmittel in der eingestellten Position arretiert werden können, damit ein unbeabsichtigtes Verstellen der eingestellten maximalen Durchflussmenge durch die Zweigleitung sicher verhindert wird, bevorzugt, dass in der jeweils eingestellten axialen Position des Anschlagbauteils bezüglich der Einstellspindel dessen rotatorische Position auf der Einstellspindel mit den Arretierungsmitteln arretiert werden kann, bevorzugterweise durch rotatorischen Formschluss mit der Einstellspindel. Dies ermöglicht eine präzise und robuste Arretierung des Anschlagbauteils in der eingestellten Position.

Dabei ist es weiter bevorzugt, dass die Arretierungsmittel einen Ring oder eine Haube aufweisen, welcher oder welche rotatorisch formschlüssig in am Umfang der Einstellspindel und am Umfang des Anschlagbauteils angeordnete Konturen eingreift oder solche Konturen rotatorisch formschlüssig umgreift.

Bevorzugterweise wird dieser Ring oder diese Haube zur Arretierung der rotatorischen Position des Anschlagbauteils in axialer Richtung auf die Zweigleitung zu auf das Anschlagbauteil aufgesteckt, und verrastet in der Position, in welcher er oder sie die rotatorische Position des Anschlagbauteils arretiert, axial mit dem Anschlagbauteil und/oder mit der Einstellspindel. Derartige Arretierungsmittel haben sich als besonders praxistauglich und platzsparend erwiesen.

Bevorzugterweise kann diese Verrastung und damit die Arretierung nur unter Beschädigung oder Zerstörung des Rings oder der Haube aufgehoben werden, so dass visuell erkennbar ist, ob möglicherweise eine Verstellung der ursprünglich eingestellten maximalen Durchflussmenge durch die Zweigleitung stattgefunden hat oder nicht.

Auch ist das Verteilerventil bei den zuvor genannten Ausführungsformen, bei denen die Arretierungsmittel einen Ring oder eine Haube aufweisen, welcher oder welche rotatorisch formschlüssig in am Umfang der Einstellspindel und am Umfang des Anschlagbauteils angeordnete Konturen eingreift oder solche Konturen formschlüssig umgreift, bevorzugt, dass dieser Ring oder diese Haube zur Aufhebung der Arretierung der rotatorischen Position des Anschlagbauteils in axialer Richtung von der Zweigleitung weg von dem Anschlagbauteil abgezogen werden muss, wobei es weiter bevorzugt ist, dass der Ring bzw. die Haube dabei in einer axialen Position, in welcher er bzw. sie das Anschlagbauteil vollständig zur Einstellung freigibt, mit der Einstellspindel verrastet. Auf diese Weise kann der Ring oder die Haube während der Durchführung von Einstellarbeiten unverlierbar am Verteilerventil verbleiben und nach der Beendigung der Einstellarbeiten wieder zur Arretierung der Einstellung verwendet werden.

Ebenfalls ist es bei den zuvor erwähnten Ausführungsformen des Verteilerventils, bei denen Arretierungsmittel vorhanden sind, mittels welchen bei der jeweils eingestellten axialen Position des Anschlagbauteils bezüglich der Einstellspindel dessen rotatorische Position auf der Einstellspindel arretiert werden kann, bevorzugt, dass die Arretierungsmittel mittels einer Plombe gesichert sind oder sicherbar sind, welche bei einer Aufhebung der durch die Arretierungsmittel bewirkten Arretierung der rotatorischen Position des Anschlagbauteils auf der Einstellspindel beschädigt oder zerstört wird. Auch hierdurch ist visuell erkennbar, ob möglicherweise eine Verstellung der ursprünglich eingestellten maximalen Durchflussmenge durch die Zweigleitung stattgefunden hat oder nicht, und es wird zudem möglich anzuzeigen, wer eine gesicherte Einstellung vorgenommen hat.

In noch einer weiteren bevorzugten Ausführungsform ist das erfindungsgemässe Verteilerventil derartig ausgebildet, dass durch ein axiales Bewegen der Einstellspindel in Richtung von der Zweigleitung wegzeigend der Durchfluss durch die Zweigleitung vollständig gesperrt werden kann. Hierdurch werden die erfindungsgemässen Verteilerventile auch als Absperrventile einsetzbar und ermöglichen so beispielsweise eine vorübergehende vollständige Absperrung eines damit gespeisten Einzelkreislaufs von einem Gesamtsystem, z.B. um ein wasserführendes Bauteil im Kreislauf auszutauschen.

Ein zweiter Aspekt der Erfindung betrifft eine Verteileranordnung mit mindestens zwei Verteilerventilen gemäss dem ersten Aspekt der Erfindung.

Derartige Verteileranordnungen stellen bevorzugte Handelsformen der Erfindung dar.

### Kurze Beschreibung der Zeichnungen

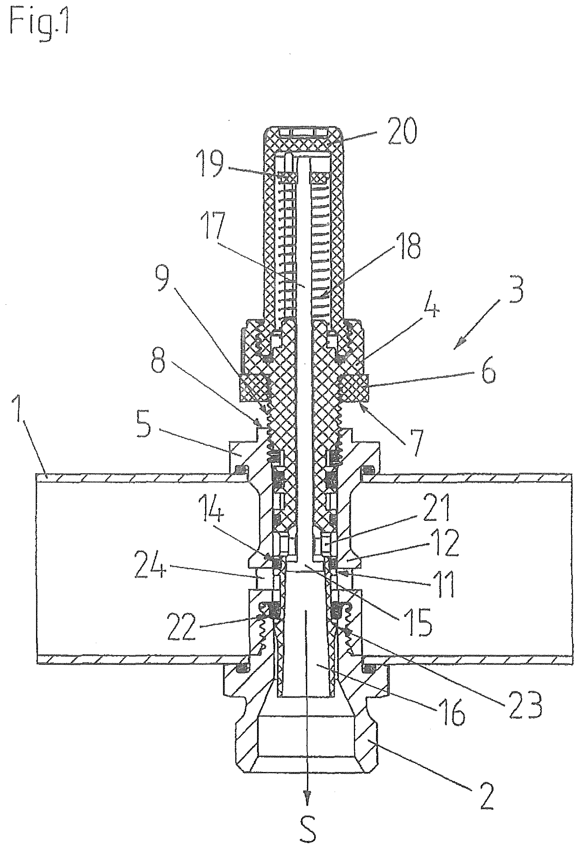

Weitere Vorteile und Anwendungen der Erfindung ergeben sich aus der nun folgenden Beschreibung anhand der Figuren 1 bis 6, welche Schnittdarstellungen durch ein erfindungsgemässes Verteilerventil mit Durchflussmesser in verschiedenen Einstellungen bzw. Situationen zeigen.

### Wege zur Ausführung der Erfindung

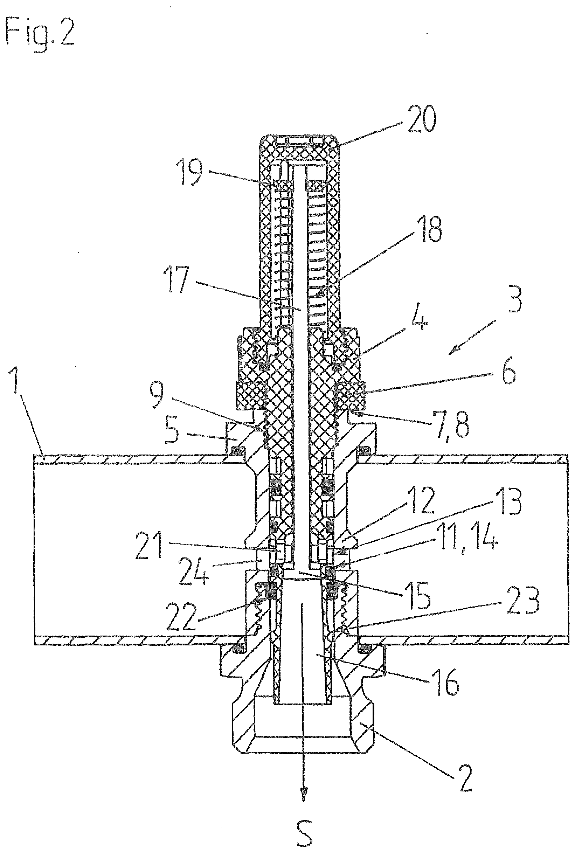

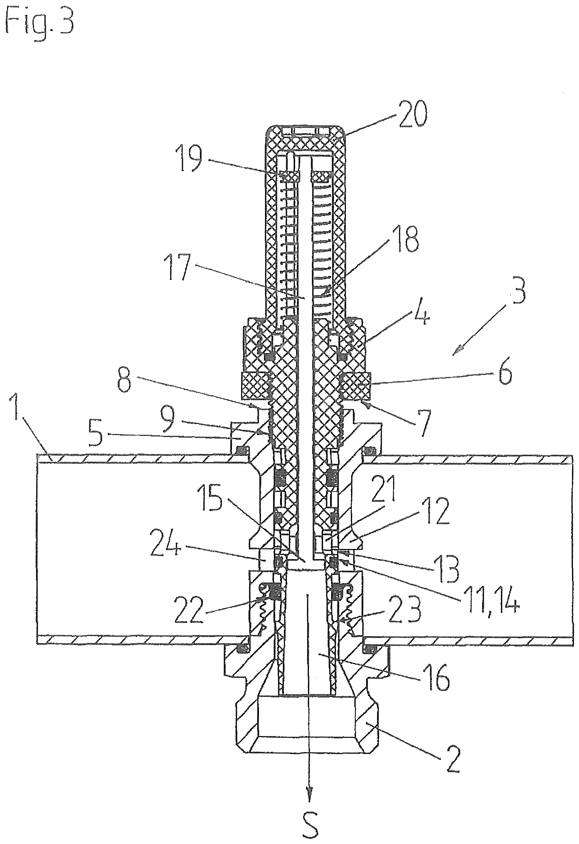

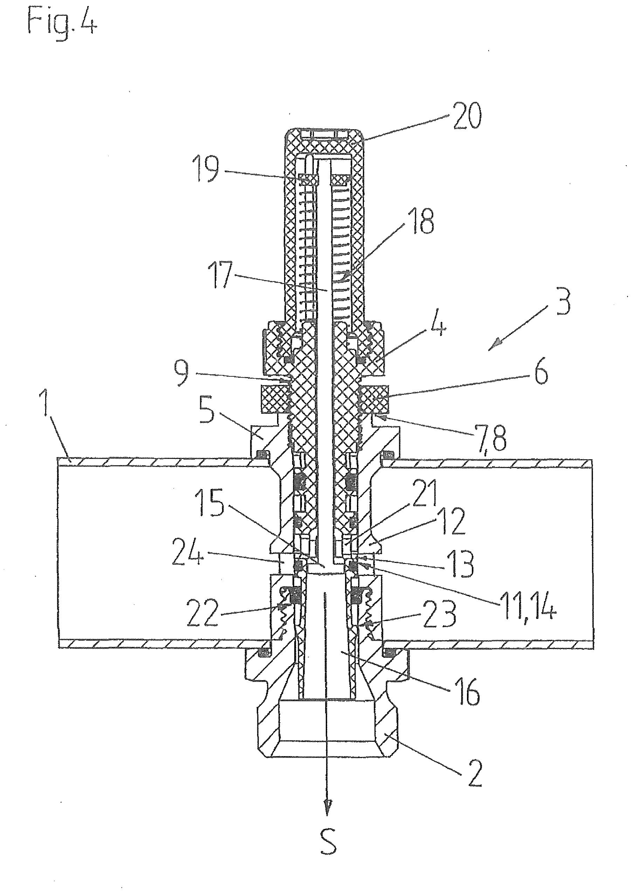

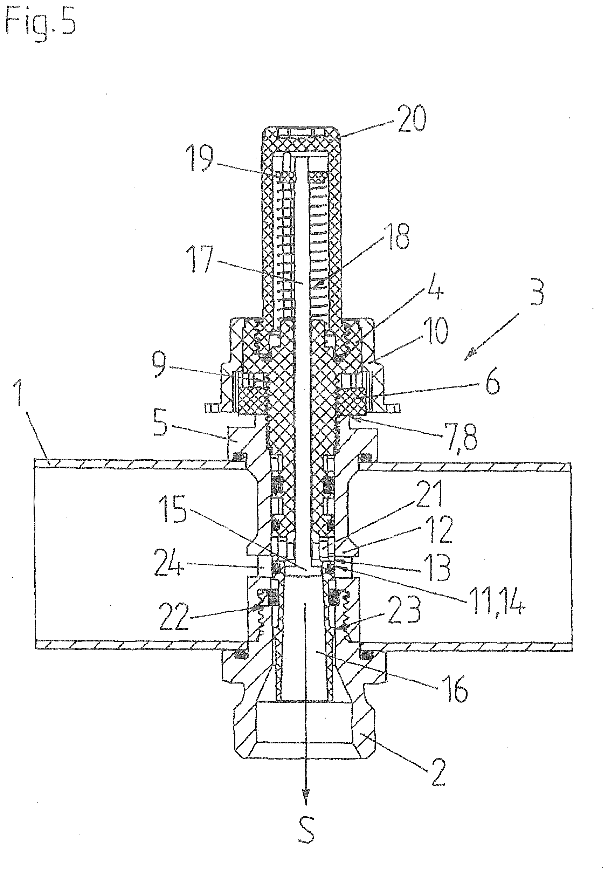

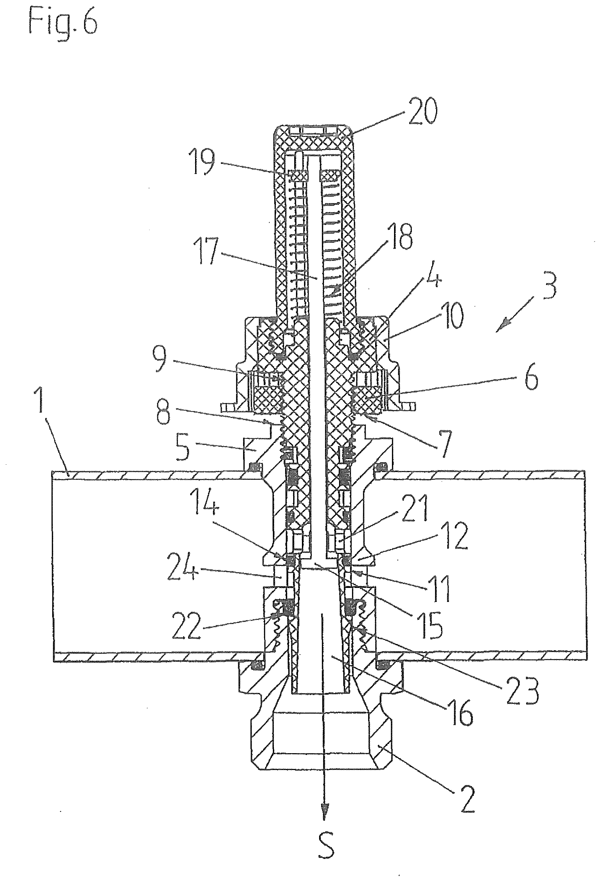

Die Figuren 1 bis 6 zeigen Schnitte identischer Schnittlegung durch ein erfindungsgemässes Verteilerventil mit Durchflussmesser in verschiedenen Einstellungen und Situationen, nämlich bei vollständig geschlossenem Ventil (Fig. 1), bei vollständig geöffnetem Ventil (Fig. 2), bei für eine bestimmte Durchflussmenge eingestelltem Ventil einmal ohne entsprechend eingestellte Anschlagmutter 6 (Fig. 3), einmal mit entsprechend eingestellter Anschlagmutter 6 (Fig. 4) und einmal mit in der eingestellten Position arretierter Anschlagmutter 6 (Fig. 5), sowie bei vollständig geschlossenem Ventil mit in der eingestellten Position arretierter Anschlagmutter 6 (Fig. 6)

Alle Darstellungen zeigen das Ventil jeweils im nicht-durchströmten Zustand, weshalb die Anzeige des Durchflussmessers, auf den im Folgenden noch genauer eingegangen wird, in allen Darstellungen keinen Durchfluss anzeigt.

Das dargestellte Verteilerventil ist zur Regulierung der Durchflussmenge durch einen Warmwasser-Heizkreislauf vorgesehen und wurde durch Einbringen und gegenseitiges Verschrauben einer Einstell- und Messeinheit 3 und einer Zweigleitung 2 von aussen her in zwei sich gegenüberliegende Aufnahmeöffnungen in einem Vorlauf-Verteilerbalken 1 mit mehreren derartigen Ventilen (nur der Ausschnitt mit diesem Ventil gezeigt) gebildet, welcher als Gehäuse und Zuleitung dient.

Die Zweigleitung 2 dient hier als abführende Leitung und ist im vorliegenden Fall an ihrem freien Ende mit einem Aussengewinde für den Anschluss an die Zulaufleitung des Warmwasser-Heizkreislaufs versehen.

Die Einstell- und Messeinheit 3 dient der Einstellung und der Anzeige der Warmwasser-Durchflussmenge durch die Zweigleitung 2 und umfasst alle Bauteile ausser die Zweigleitung 2 und den das Gehäuse bildenden Verteilerbalken 1. Sie weist einen von einer Einstellspindel 4 getragenen hülsenförmigen Ventilschliesskörper 11 auf, der durch konzentrisches Eintauchen in eine zylindrische Bohrung eines bei bestimmungsgemässem Betrieb gegenüber dem Verteilerbalken 1 feststehenden Ventilsitzkörpers 12 zusammen mit diesem Ventilsitzkörper 12 einen durch Drehung der Einstellspindel 4 einstellbaren Ventilspalt 13 bildet, derart, dass die Ventilspaltbreite mit zunehmendem Eintauchen des Ventilschliesskörpers 11 in die zylindrische Bohrung des Ventilsitzkörpers 12 abnimmt, bis kein Ventilspalt 13 mehr vorhanden ist und das Ventil vollständig geschlossen ist. Die eigentliche Abdichtung bei vollständig geschlossenem Ventil erfolgt über einen Dichtring 14.

Der Durchflussmesser der Einstell- und Messeinheit 3 verfügt über ein knopfartiges Anströmglied 15, welches in einem konusförmigen Strömungskanal 16 angeordnet ist, der an den Ventilschliesskörper 11 anschliesst und ebenfalls von der Einstellspindel 4 getragen ist. Im bestimmungsgemässen Betrieb strömt das vom Ventilspalt 13 kommende Wasser über mehrere radiale Öffnungen 21 in den Ventilschliesskörper 11 ein und von diesem aus in den Strömungskanal 16, welchen es vollständig durchströmt bevor es das Verteilerventil durch die Zweigleitung 2 verlässt.

Das Anströmglied 15 ist mit einer Anzeigestange 17 verbunden, die von einer Spiralfeder 18 mit einer Federkraft entgegen der Durchströmungsrichtung S durch den Strömungskanal 16 beaufschlagt ist.

Dabei ist das Anströmglied 15 derartig im Strömungskanal 16 angeordnet, dass es, zusammen mit der Anzeigestange 17, ausgehend von einer Ausgangsposition, in welcher es durch die federbeaufschlagte Anzeigestange 17 bei Nicht-Durchströmung des Strömungskanals 16 positioniert wird, bei Durchströmung des Strömungskanals 16 in Abhängigkeit von der Durchflussmenge entgegen der Federkraft ausgelenkt wird, so dass eine bestimmte axiale Position des Anströmglieds 15 und der Anzeigestange 17 im Strömungskanal 16 einer bestimmten Durchflussmenge durch den Strömungskanal 16 und damit auch durch die Zweigleitung 2 entspricht. Das nach aussen gerichtete freie Ende der Anzeigestange 17 weist ein tellerartiges Widerlager 19 für die Feder 18 auf, welches an seinem Umfang farblich markiert ist und somit eine Anzeigemarkierung darstellt. Es wird von einer durchsichtigen Kunststoffhaube 20 vollständig umschlossen. Diese Kunststoffhaube 20 ist fest mit der Einstellspindel 4 verbunden, so dass sie als Einstellorgan zum manuellen Betätigen der Einstellspindel 4 dienen kann und sich beim Drehen derselben axial zusammen mit dieser gegenüber den gehäusefesten Teilen des Verteilerventils verschiebt. Die durchsichtige Kunststoffhaube 20 ist in axialer Richtung mit einer Skalierung (nicht gezeigt) für die Durchflussmenge versehen, so dass die jeweilige Position der Anzeigestange 17 bezüglich der Skalierung auf der Kunststoffhaube 20 und damit auch die Durchflussmenge durch die Zweigleitung 2 von aussen her abgelesen werden kann.

Der Ventilsitzkörper 12 wird von dem Grundkörper 5 der Einstell- und Messeinheit 3 gebildet, welcher sämtliche Hauptkomponenten der Einstell- und Messeinheit 3 zu einer Einheit vereinigt und über ein Gewinde fest mit der Zweigleitung 2 verbunden ist. Dabei sind beide Bauteile 5, 2 jeweils mit einem Dichtring gegenüber dem Verteilerbalken 1 abgedichtet. Dadurch, dass der Ventilsitzkörper 12 von dem Grundkörper 5 der Einstell- und Messeinheit 3 gebildet wird, ergibt sich der Vorteil, dass zwischen Ventilschliesskörper 11 und Ventilsitzkörper 12 unabhängig von etwaigen Fertigungstoleranzen des Verteilerbalkens 1 und/oder der Zweigleitung 2 immer eine exakte Ausrichtung vorliegt und die Masshaltigkeit dieser Teile auf einfache Weise sichergestellt werden kann, so dass die gewünschte Regelungscharakteristik und Dichtheit immer gewährleistet ist.

Der Zufluss von der vom Verteilerbalken 1 gebildeten Zuleitung zu dem von Ventilschliesskörper 11 und Ventilsitzkörper 12 gebildeten Ventilspalt 13 erfolgt über vier gleichmässig auf einer gemeinsamen axialen Position am Umfang des Grundkörpers 5 der Einstell- und Messeinheit 3 verteilte radiale Durchtrittsöffnungen 24.

Der Strömungskanal 16 wird von demjenigen Bauteil gebildet, welches auch den Ventilschliesskörper 11 bildet. Auf diese Weise sind diejenigen Wandungen, welche den Strömungskanal 16 in dem Bereich begrenzen, in welchem das Anströmglied 15 im bestimmungsgemässen Betrieb durch die Strömungskräfte positioniert werden kann und welche deshalb für die Messgenauigkeit von besonderer Bedeutung sind, von einem Bauteil der Einstell- und Messeinheit 3 gebildet, was den Vorteil ergibt, dass zwischen den erwähnten Wandungen des Strömungskanals 16 und dem Anströmglied 15 unabhängig von etwaigen Fertigungstoleranzen des Verteilerbalkens 1 und/oder der Zweigleitung 2 auf einfache Weise eine exakte axiale wie radiale Ausrichtung erreicht wird und die Masshaltigkeit dieser Teile auf einfache Weise sichergestellt werden kann, so dass eine hohe Messgenauigkeit gewährleistet ist.

Die Einstellspindel 4, der Ventilschliesskörper 11 und der Strömungskanal 16 werden gemeinsam von einem einstückigen Kunststoffspritzgussteil gebildet, wodurch solche Verteilerventile aus relativ wenig Einzelteilen bestehen und sich besonders kostengünstig herstellen lassen.

Wie deutlich zu erkennen ist, wird der Strömungskanal 16 von einem freien Ende mit im Wesentlichen zylindrischer Aussenkontur des Bauteils gebildet, welches auch den Ventilschliesskörper 11 bildet, wobei dieses freie Ende axial in eine Bohrung in der Zweigleitung 2 hineinragt.

Um die Bildung einer Leckageströmung in die Zweigleitung 2 zu verhindern, welche den Strömungskanal 16 umgehen und somit zu einer Fehlmessung führen würde, ist dieses freie Ende radial mit einer Dichtung 22 derartig gegenüber der Zweigleitung 2 abgedichtet, dass sowohl eine Rotation als auch eine axiale translatorische Bewegung dieses freien Endes möglich ist, ohne die Abdichtung zu beeinträchtigen. Diese Dichtung 22 dichtet zudem auch den Grundkörper 5 der Einstell- und Messeinheit 3 und die Zweigleitung 2 gegeneinander ab. Auch dient diese Dichtung 22 als axialer Anschlag für eine am Aussenumfang des den Strömungskanal 16 bildenden Bauteils angeordnete Anschlagschulter 23, welche ein Herausschrauben der Einstellspindel 4 aus dem Grundkörper 5 der Einstell- und Messeinheit 3 verhindert.

Wie bereits erwähnt wurde, erfolgt die Einströmung des vom Ventilspalt 13 kommenden Wassers in den Eintrittsbereich des Strömungskanals 16 über mehrere radiale Öffnungen 21 in der Wandung des hülsenförmigen Ventilschliesskörpers 11, welche in Strömungsrichtung S gesehen vor dem sich bei Nicht-Durchströmung des Strömungskanals 16 in seiner Ausgangsposition befindlichen Anströmglied 15 angeordnet sind. Es sind vier radiale Öffnungen 21 mit jeweils identischem Querschnitt und identischer Querschnittsform auf einer gemeinsamen axialen Position gleichmässig am Umfang des hülsenförmigen Ventilschliesskörpers 11 verteilt angeordnet. Diese Bauweise führt zu einer gleichmässigen Anströmung des Anströmglieds 15 im Strömungskanal 16, wodurch sich eine beruhigte Anzeige und somit eine gute Ablesbarkeit der Durchflussmenge erzielen lässt.

Wie aus einer Zusammenschau der Figuren 1 bis 3 zu erkennen ist, wird der Ventilspalt 13 ausgehend von der in Fig. 1 dargestellten vollständig geschlossenen Situation durch ein Verdrehen der Einstellspindel 4 gegenüber dem Grundkörper 5 der Einstell- und Messeinheit 3 derart, dass sie sich axial auf die Zweigleitung 2 zu bewegt, geöffnet bzw. vergrössert, bis eine maximale Ventilspaltöffnung wie in Fig. 2 dargestellt erreicht ist. Im bestimmungsgemässen Betrieb vergrössert sich dabei die Durchflussmenge durch die Zweigleitung 2 entsprechend, wobei typischerweise eine zwischen diesen beiden Extremen liegende Ventilspaltöffnung 13 eingestellt wird, um einen bestimmten, im Einstellbereich des Verteilerventils liegenden Durchfluss durch die Zweigleitung 2 zu erreichen, z.B. eine Ventilspaltöffnung 13 wie in Fig. 3 dargestellt.

Um diese Einstellung zu sichern wird, z.B. ausgehend von der in Fig. 3 dargestellten Einstellung, die Anschlagmutter 6, welche auf dem Gewinde 9 der Einstellspindel 4 angeordnet ist, auf diesem Gewinde 9 gegenüber der Einstellspindel 4 verdreht, bis sie mit ihrer der Zweigleitung 2 zugewandten Stirnseite 7 (anspruchsgemässe erste Anschlagfläche) an der ihr zugewandten Stirnseite 8 des Grundkörper 5 der Einstell- und Messeinheit 3 (anspruchsgemässe zweite Anschlagfläche) anschlägt. Diese Situation ist in Fig. 4 dargestellt.

Sodann wird die Anschlagmutter 6 in dieser Position mittels einer Arretierungshaube 10 gegen ein Verdrehen gegenüber der Einstellspindel 4 gesichert, welche in axialer Richtung auf die Zweigleitung 2 zu auf die Einstellspindel 4 und die Anschlagmutter 6 aufgesteckt wird und dabei rotatorisch formschlüssig am Umfang der Einstellspindel 4 und am Umfang des Anschlagmutter 6 angeordnete Konturen umgreift. Dabei verrastet die Haube 10 in axialer Richtung mit der Anschlagmutter 6. Diese Situation ist in Fig. 5 dargestellt.

Soll nun ausgehend von dieser Situation gemäss Fig. 5 die Durchflussmenge durch die Zweigleitung 2 des Verteilerventils vorübergehend verringert werden oder das Ventil vorübergehend vollständig abgesperrt werden, ohne dass die ursprünglich eingestellte Durchflussmenge anschliessend neu ermittelt werden muss, so wird die Einstellspindel 4 zusammen mit der Anschlagmutter 6 und der Arretierungshaube 10 gegenüber dem Grundkörper 5 der Einstell- und Messeinheit 3 verdreht, derart, dass sie sich gegenüber diesem Grundkörper 5 in axialer Richtung von der Zweigleitung 2 weg bewegt, bis die gewünschte Situation erreicht ist.

Fig. 6 zeigt die Situation für den Fall, dass das Verteilerventil vorübergehend vollständig abgesperrt wird. Um das Ventil ausgehend von dieser Situation wieder auf die ursprünglich eingestellte Durchflussmenge durch die Zweigleitung 2 einzustellen, muss nun lediglich die Einstellspindel 4 zusammen mit der Anschlagmutter 6 und der Arretierungshaube 10 wieder gegenüber dem Grundkörper 5 der Einstell- und Messeinheit 3 in umgekehrter Richtung verdreht werden, bis die Anschlagmutter 6 mit ihrer Stirnseite 7 an der Stirnseite 8 des Grundkörpers 5 der Einstell- und Messeinheit 3 anschlägt.

Soll eine andere Durchflussmenge durch die Zweigleitung 2 eingestellt werden, muss die Arretierungshaube 10 von der Anschlagmutter 6 und der Einstellspindel 4 abgezogen werden und es müssen sodann die zuvor beschriebenen Schritte erneut durchgeführt werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der nun folgenden Patentansprüche ausgeführt werden kann.

## Patentansprüche

1. Verteilerventil für die Verwendung im Zulauf oder Rücklauf eines Medium-Kreislaufs zum Heizen oder Kühlen, mit einem die Zu- bzw. Rücklaufleitung bildenden Gehäuse (1), einer vom Gehäuse (1) abgehenden Zweigleitung (2) und einer separat vom Gehäuse (1) ausgebildeten und gegenüberliegend der Zweigleitung (2) am Gehäuse (1) angeordneten und die Gehäusewandung durchdringenden Einstelleinheit (3) zum Einstellen einer Durchflussmenge des Mediums durch die Zweigleitung (2),
wobei die Einstelleinheit (3) eine Einstellspindel (4) aufweist, deren axiale Position gegenüber einem insbesondere fest mit dem Gehäuse (1) verbundenen Bauteil (5) der Einstelleinheit (3) durch Verdrehen gegenüber diesem Bauteil (5) verändert werden kann, unter einer Veränderung der Durchflussmenge durch die Zweigleitung (2),
wobei das Ventil derartig aufgebaut ist, dass ein axiales Bewegen der Einstellspindel (4) gegenüber dem Bauteil (5) in Richtung auf die Zweigleitung (2) zu eine Vergrösserung der Durchflussmenge durch die Zweigleitung (2) bewirkt und
wobei einstellbare Anschlagmittel vorhanden sind, mittels welchen durch Anschlagen einer mit der Einstellspindel (4) in Verbindung stehenden ersten Anschlagfläche (7) an einer mit dem Gehäuse (1) in Verbindung stehenden zweiten Anschlagfläche (8) eine axiale Bewegung der Einstellspindel (4) gegenüber dem Bauteil (5) in Richtung auf die Zweigleitung (2) zu an einer bestimmten Axialposition begrenzt werden kann, zur Begrenzung der maximal einstellbaren Durchflussmenge durch die Zweigleitung (2)
und wobei die Position, insbesondere die axiale Position der ersten Anschlagfläche (7) bezüglich der Einstellspindel (4) einstellbar ist.

2. Verteilerventil nach Anspruch 1, wobei die zweite Anschlagfläche (8) von dem mit dem Gehäuse (1) verbundenen Bauteil (5) der Einstelleinheit (3), gegenüber welchem die axiale Position der Einstellspindel (4) durch Verdrehen verändert werden kann, gebildet ist oder mit diesem in Verbindung steht.

3. Verteilerventil nach einem der vorangehenden Ansprüche, wobei die erste Anschlagfläche (7) in Richtung der Zweigleitung (2) weist und wobei diese zur Begrenzung der maximal einstellbaren Durchflussmenge durch die Zweigleitung (2) in axialer Richtung an der zweiten Anschlagfläche (8) anschlägt.

4. Verteilerventil nach einem der vorangehenden Ansprüche, umfassend eine Messeinheit zum Messen und Anzeigen einer Durchflussmenge von Medium durch die Zweigleitung (2) aussen am Verteilerventil.

5. Verteilerventil nach Anspruch 4, wobei die Einstelleinheit und die Messeinheit gemeinsam als kombinierte Einstell- und Messeinheit (3) ausgebildet sind.

6. Verteilerventil nach einem der vorangehenden Ansprüche, wobei die einstellbaren Anschlagmittel in der eingestellten Position arretiert werden können.

7. Verteilerventil nach einem der vorangehenden Ansprüche, wobei die erste Anschlagfläche (7) von einem Anschlagbauteil (6) gebildet wird, welches auf einem Gewinde (9) der Einstellspindel (4) befestigt ist, so dass dessen axiale Position bezüglich der Einstellspindel (4) durch Verdrehen gegenüber der Einstellspindel (4) eingestellt werden kann.

8. Verteilerventil nach einem der vorangehenden Ansprüche, wobei die zweite Anschlagfläche (8) fest mit dem Gehäuse (1) bzw. mit dem Bauteil (5) verbunden ist, gegenüber welchem die axiale Position der Einstellspindel (4) durch Verdrehen verändert werden kann.

9. Verteilerventil nach einem der Ansprüche 1 bis 7, wobei die Position, insbesondere die axiale Position der zweiten Anschlagfläche (8) bezüglich des Gehäuses (1) bzw. des Bauteils (5), gegenüber welchem die axiale Position der Einstellspindel (4) durch Verdrehen verändert werden kann, einstellbar ist.

10. Verteilerventil nach Anspruch 9, wobei die erste Anschlagfläche (7) fest mit der Einstellspindel (4) verbunden ist.

11. Verteilerventil nach Anspruch 6 und nach Anspruch 7, wobei Arretierungsmittel (10) vorhanden sind, mittels welchen bei der jeweils eingestellten axialen Position des Anschlagbauteils (6) bezüglich der Einstellspindel (4) dessen rotatorische Position auf der Einstellspindel (4) arretiert werden kann, insbesondere formschlüssig arretiert werden kann.

12. Verteilerventil nach Anspruch 11, wobei die Arretierungsmittel einen Ring oder eine Haube (10) aufweisen, welcher oder welche rotatorisch formschlüssig in am Umfang der Einstellspindel (4) und am Umfang des Anschlagbauteils (6) angeordnete Konturen eingreift oder solche Konturen formschlüssig umgreift.

13. Verteilerventil nach Anspruch 12, wobei das Ventil derartig ausgebildet ist, dass zur Arretierung der rotatorischen Position des Anschlagbauteils (6) der Ring oder die Haube (10) in axialer Richtung auf die Zweigleitung (2) zu auf das Anschlagbauteil (6) aufgesteckt wird.

14. Verteilerventil nach Anspruch 13, wobei der Ring oder die Haube (10) in der Position, in welcher dieser oder diese die rotatorische Position des Anschlagbauteils (6) arretiert, axial mit dem Anschlagbauteil (6) und/oder mit der Einstellspindel (4) verrastet.

15. Verteilerventil nach Anspruch 14, wobei diese Verrastung nur unter Beschädigung oder Zerstörung des Rings oder der Haube aufgehoben werden kann.

16. Verteilerventil nach einem der Ansprüche 12 bis 15, wobei das Ventil derartig ausgebildet ist, dass der Ring oder die Haube (10) zur Aufhebung der Arretierung der rotatorischen Position des Anschlagbauteils (6) in axialer Richtung von der Zweigleitung (2) weg von dem Anschlagbauteil (6) abgezogen werden muss, und insbesondere, dass der Ring bzw. die Haube (10) dabei in einer axialen Position, in welcher er bzw. sie das Anschlagbauteil (6) vollständig zur Einstellung freigibt, mit der Einstellspindel (4) verrastet.

17. Verteilerventil nach einem der Ansprüche 11 bis 16, wobei die Arretierungsmittel mittels einer Verplombung gesichert sind oder sicherbar sind, welche bei einer Aufhebung der durch die Arretierungsmittel bewirkten Arretierung der rotatorischen Position des Anschlagbauteils (6) auf der Einstellspindel (4) beschädigt oder zerstört wird.

18. Verteilerventil nach einem der vorangehenden Ansprüche, wobei das Ventil derartig ausgebildet ist, dass durch ein axiales Bewegen der Einstellspindel (4) in Richtung von der Zweigleitung (2) wegzeigend der Durchfluss durch die Zweigleitung (2) vollständig gesperrt werden kann.

19. Verteileranordnung umfassend mindestens zwei Verteilerventile nach einem der vorangehenden Ansprüche.

## Claims

1. Distribution valve for the use in the feed or the return of a medium circuit for heating or cooling, with a housing (1) forming the feed line or the return line, respectively, a branch line (2) branching off from the housing (1) and an adjusting unit (3) for adjustment of a flow of medium through the branch line (2), which adjusting unit is formed separately from the housing (1) and opposite to the branch line (2) is arranged at the housing (1) and protrudes the housing wall,
wherein the adjusting unit (3) comprises an adjusting spindle (4), the axial position of which with respect to a component (5) of the adjusting unit (3) which in particular is fixedly connected to the housing (1) can be changed by twisting it relative to said component (5), thereby changing the flow rate through the branch line (2),
wherein the valve is designed in such a manner that an axial movement of the adjusting spindle (4) relative to the component (5) in direction towards the branch line (2) effectuates an increase of the flow rate through the branch line (2), and
wherein adjustable stopper means are present by means of which, through abutting of a first abutment face (7) which is connected with the adjusting spindle (4) against a second abutment face (8) which is connected with the housing (1), an axial movement of the adjusting spindle (4) with respect to the component (5) in direction towards the branch line (2) is limited at a specific axial position, for limiting the maximum flow rate through the branch line (2) that can be adjusted
and wherein the position, particularly the axial position of the first abutment face (7) is adjustable with respect to the adjusting spindle (4).

2. Distribution valve according to claim 1, wherein the second abutment face (8) is formed by or is connected with the component (5) of the adjusting unit (3) which is connected with the housing (1) and with respect to which the axial position of the adjusting spindle (4) can be changed by twisting.

3. Distribution valve according to one of the preceding claims, wherein the first abutment face (7) is facing towards the branch line (2) and wherein it, for limiting the maximum flow rate through the branch line (2) that can be adjusted, in axial direction abuts against the second abutment face (8).

4. Distribution valve according to one of the preceding claims, further comprising a measuring unit for measuring and indicating at the outside of the distribution valve a flow rate of medium through the branch line (2) .

5. Distribution valve according to claim 4, wherein the adjusting unit and the measuring unit are commonly formed as a combined adjusting and measuring unit (3).

6. Distribution valve according to one of the preceding claims, wherein the adjustable stopper means in the adjusted position can be locked.

7. Distribution valve according to one of the preceding claims, wherein the first abutment face (7) is formed by an abutment component (6) which is mounted on a thread (9) of the adjusting spindle (4), such that its axial position with respect to the adjusting spindle (4) can be adjusted by twisting it relative to the adjusting spindle (4).

8. Distribution valve according to one of the claims 7 to 8, wherein the second abutment face (8) is fixedly connected with the housing (1) or with the component (5), respectively, relative to which the axial position of the adjusting spindle (4) by twisting can be changed.

9. Distribution valve according to one of the claims 1 to 7, wherein the position, in particular the axial position of the second abutment face (8) with respect to the housing (1) or the component (5), respectively, relative to which the axial position of the adjusting spindle (4) by twisting can be changed, is adjustable.

10. Distribution valve according to claim 9, wherein the first abutment face (7) is firmly connected with the adjusting spindle (4).

11. Distribution valve according to claim 6 and according to claim 7, wherein locking means (10) are present, by means of which in the respective adjusted axial position of the abutment component (6) with respect to the adjusting spindle (4) its rotatory position on the adjusting spindle (4) can be locked, in particular can be locked by positive locking.

12. Distribution valve according to claim 11, wherein the locking means comprise a ring or a hood (10), which in a rotatably positive locking manner engages contours formed at the circumference of the adjusting spindle (4) and at the circumference of the abutment component (6) or in a positive manner encompasses such contours.

13. Distribution valve according to claim 12, wherein the valve is designed in such a manner that for locking the rotatory position of the abutment component (6), the ring or the hood (10) is pushed in axial direction towards the branch line (2) onto the abutment component (6).

14. Distribution valve according to claim 13, wherein the ring or the hood (10) in the position, in which it locks the rotatory position of the abutment component (6), axially latches with the abutment component (6) and/or with the adjusting spindle (4).

15. Distribution valve according to claim 14, wherein this latching can be cancelled only by damaging or destroying the ring or the hood.

16. Distribution valve according to one of the claims 12 to 15, wherein the valve is designed in such a manner, that the ring or the hood (10) for releasing the locking of the rotatory position of the abutment component (6) has to be removed from the abutment component (6) in an axial direction pointing away from the branch line (2), and in particular, that the ring or the hood (10) in doing so, in an axial position in which it completely releases the abutment component (6) for adjustment of same, latches with the adjusting spindle (4).

17. Distribution valve according to one of the claims 11 to 16, wherein the locking means by means of a lead-sealing are secured or are securable, which upon releasing the locking of the rotatory position of the abutment component (6) on the adjusting spindle (4), which is effectuated by the locking means, is damaged or destroyed.

18. Distribution valve according to one of the preceding claims, wherein the valve is designed in such a manner that through an axial movement of the adjusting spindle (4) in a direction pointing away from the branch line (2) the flow through the branch line (2) can completely be stopped.

19. Distribution arrangement comprising at least two distribution valves according to one of the preceding claims.

## Revendications

1. Vanne de distribution pour l'utilisation dans l'alimentation ou le retour d'un circuit de fluide pour le chauffage ou le refroidissement, avec un boîtier (1) formant la conduite d'alimentation ou bien de retour, une conduite de dérivation (2) partant du boîtier (1) et une unité de réglage (3) pour le réglage d'un débit de fluide à travers la conduite de dérivation (2), laquelle unité de réglage est formée séparément du boîtier (1) et est disposée sur le boîtier (1) en face de la conduite de dérivation (2) et fait saille de la paroi du boîtier,
dans laquelle l'unité de réglage (3) comprend une broche de réglage (4), dont la position axiale par rapport à un composant (5) de l'unité de réglage (3) qui est en particulier relié de manière fixe au boîtier (1) peut être modifiée en la tournant par rapport audit composant (5), ce qui modifie le débit à travers la conduite de dérivation (2),
dans laquelle la vanne est conçue de telle manière qu'un mouvement axial de la broche de réglage (4) par rapport au composant (5) en direction de la conduite de dérivation (2) effectue une augmentation du débit à travers la conduite de dérivation (2), et
dans laquelle il existe des moyens de butée réglables au moyen desquels, par la mise en butée d'une première face de butée (7) qui est reliée à la broche de réglage (4) contre une deuxième face de butée (8) qui est reliée au boîtier (1), un mouvement axial de la broche de réglage (4) par rapport au composant (5) en direction vers la conduite de dérivation (2) est limité à une position axiale spécifique, pour limiter le débit maximum réglable à travers la conduite de dérivation (2)
et dans laquelle la position, en particulier la position axiale de la première face de butée (7) est réglable par rapport à la broche de réglage (4).

2. Vanne de distribution selon la revendication 1, dans laquelle la deuxième face de butée (8) est formée par ou est reliée au composant (5) de l'unité de réglage (3) qui est reliée au boîtier (1) et par rapport à laquelle la position axiale de la broche de réglage (4) peut être modifiée par rotation.

3. Vanne de distribution selon l'une des revendications précédentes, dans laquelle la première face de butée (7) est tournée vers la conduite de dérivation (2) et dans laquelle, pour limiter le débit maximal réglable à travers la conduite de dérivation (2), elle s'appuie en direction axiale contre la deuxième face de butée (8).

4. Vanne de distribution selon l'une des revendications précédentes, comprenant en outre une unité de mesure pour mesurer et indiquer à l'extérieur de la vanne de distribution un débit de fluide à travers la conduite de dérivation (2).

5. Vanne de distribution selon la revendication 4, dans laquelle l'unité de réglage et l'unité de mesure sont généralement formées d'une unité combinée de réglage et de mesure (3).

6. Vanne de distribution selon l'une des revendications précédentes, dans laquelle le moyen de butée réglable peut être verrouillé dans la position réglée.

7. Vanne de distribution selon l'une des revendications précédentes, dans laquelle la première face de butée (7) est formée par un élément de butée (6) qui est monté sur un filetage (9) de la broche de réglage (4), de telle sorte que sa position axiale par rapport à la broche de réglage (4) peut être réglée en la tournant par rapport à la broche de réglage (4).

8. Vanne de distribution selon l'une des revendications 7 à 8, dans laquelle la deuxième face de butée (8) est reliée de manière fixe au boîtier (1) ou bien au composant (5), par rapport auquel la position axiale de la broche de réglage (4) peut être modifiée par rotation.

9. Vanne de distribution selon l'une des revendications 1 à 7, dans laquelle la position, en particulier la position axiale de la deuxième face de butée (8) par rapport au boîtier (1) ou bien au composant (5), par rapport à laquelle la position axiale de la broche de réglage (4) peut être modifiée par rotation, est réglable.

10. Vanne de distribution selon la revendication 9, dans laquelle la première face de butée (7) est fermement reliée à la broche de réglage (4).

11. Vanne de distribution selon la revendication 6 et selon la revendication 7, dans laquelle sont prévus des moyens de verrouillage (10), au moyen desquels, dans la position axiale ajustée respective de la pièce de butée (6) par rapport à la broche de réglage (4), sa position de rotation sur la broche de réglage (4) peut être verrouillée, en particulier peut être verrouillée par engagement positif.

12. Vanne de distribution selon la revendication 11, dans laquelle les moyens de verrouillage comprennent une bague ou un capot (10) qui s'engage par complémentarité de formes en rotation dans des tourillons formés à la circonférence de la broche de réglage (4) et à la circonférence de la pièce de butée (6) ou qui entoure ces tourillons par complémentarité de formes.

13. Vanne de distribution selon la revendication 12, la vanne étant conçue de telle sorte que pour bloquer la position de rotation de la pièce de butée (6), la bague ou le capot (10) est poussé(e) dans le sens axial vers la conduite de dérivation (2) sur la pièce de butée (6).

14. Vanne de distribution selon la revendication 13, dans laquelle la bague ou le capot (10), dans la position dans laquelle il bloque la position de rotation de la pièce de butée (6), s'enclenche axialement avec la pièce de butée (6) et/ou avec la broche de réglage (4).

15. Vanne de distribution selon la revendication 14, dans laquelle ce verrouillage ne peut être annulé qu'en endommageant ou en détruisant la bague ou le capot.

16. Vanne de distribution selon l'une des revendications 12 à 15, la vanne étant conçue de telle manière que la bague ou le capot (10) doit être retiré de la pièce de butée (6) dans une direction axiale opposée à la conduite de dérivation (2) pour libérer le verrouillage de la position de rotation de la pièce de butée (6), et en particulier que la bague ou le capot (10) s'enclenche avec la broche de réglage (4) dans une position axiale dans laquelle il libère complètement la pièce de butée (6) pour le réglage de celle-ci.

17. Vanne de distribution selon l'une des revendications 11 à 16, dans laquelle les moyens de verrouillage sont fixés ou peuvent être fixés au moyen d'un plombage, qui, en libérant le verrouillage de la position de rotation de la pièce de butée (6) sur la broche de réglage (4), qui est effectué par les moyens de verrouillage, est endommagé ou détruit.

18. Vanne de distribution selon l'une des revendications précédentes, la vanne étant conçue de telle manière que, par un mouvement axial de la broche de réglage (4) dans une direction opposée à la conduite de dérivation (2), l'écoulement à travers la conduite de dérivation (2) peut être complètement arrêté.

19. Agencement de distribution comprenant au moins deux vannes de distribution selon l'une des revendications précédentes.
